# EUROPEAN PATENT APPLICATION

(11) **EP 3 276 190 A1**
(43) Date of publication of application: **31.01.2018**
(21) Application number: 17182816.3
(22) Date of filing: 24.07.2017
(51) Int. Cl.: F16C 11/06, F16C 17/24

(54) **A BEARING ARRANGEMENT WITH SENSOR AND AN ASSOCIATED METHOD**

(30) Priority: 29.07.2016 US 201615223440
(71) Applicant: Minebea Mitsumi Inc., Kitasaku-gun, Nagano 3890293 (JP); New Hampshire Ball Bearing Inc., Peterborough, NH 03458 (US)
(72) Inventor: WINKER, Martin, 78052 Villingen Schwenningen (DE); BAUER, Martin, 78052 Villingen Schwenningen (DE); CARBONETTI, Andrea, CH-6883 Novazzano (CH); HÜLSEN, Tobias, 63225 Langen (DE); CALABRÒ, Gaetano, CH-6883 Novazzano (CH); BHATTI, Mohammed, Lincoln, Lincolnshire LN6 3RA (GB); LEWIS, Brandyn, Laconia, NH NH03246 (US); RAY, Dick, Laconia, NH 03246 (US); OGAWA, Satoshi, 63225 Langen (DE)
(74) Representative: Harding, Andrew Philip

(57) **Abstract**

A bearing arrangement (1) comprising a housing (2), a liner (4) positioned within the housing (2) and providing a bearing surface (5); at least one sensor (20) within the liner (4), positioned at a predetermined depth beneath the bearing surface (5), configured to detect wear of the liner to said predetermined depth.

## Description

The present application relates to a bearing arrangement; and more particularly to a thrust coupling bearing arrangement. A method is also disclosed.

A thrust coupling bearing is known from WO03/029065, in the name of the applicant. A thrust coupling bearing is commonly adopted in a coupling between two adjacent carriages of a tram or similar rail vehicle. One part of the bearing is fixed to one carriage and another part of the bearing is fixed to another carriage, allowing the two adjacent carriages to rotate and pivot with respect to one another.

A liner is provided at the bearing interface between the moving parts of the bearing. Over time, the liner may wear, which can cause the thrust coupling bearing arrangement to become loose. When the wear on the liner has reached a particular level, it must be replaced.

Thrust coupling bearings tend to be fitted into vehicles in locations which are not easily inspected and/or maintained. Accordingly, any wear on the liner may only be able to be assessed by disassembling the thrust coupling bearing, which may require the vehicle to be taken out of service.

Accordingly, the liner of a known thrust coupling bearing may only be checked periodically during routine maintenance assessments, during which period extensive wear or other mechanical malfunctions may have developed.

Another problem associated with thrust coupling bearings is that the screws holding the assembly together can become loose over time, meaning that the bearing elements may not be in constant sliding relationship with one another. The force imposed on the bearing may cause uneven wearing. Moreover, the screws may work free, or fail, and the bearing may disassemble entirely, resulting in catastrophic failure of the arrangement and potential disconnection of the carriages. Any loose or failed screws may only be detected during routine maintenance.

The invention seeks to provide an improved bearing arrangement and associated method.

Accordingly, the present invention provides a bearing arrangement comprising:
a housing,
a liner positioned within the housing and providing a bearing surface;
at least one sensor within the liner, positioned at a predetermined depth beneath the bearing surface, configured to detect wear of the liner to said predetermined depth.

Preferably, at least part of the at least one sensor is embedded within the liner.

Preferably, at least part of the at least one sensor is integrally formed with the liner.

Preferably, the bearing arrangement further comprises two sensors within the liner, wherein
a first sensor positioned at a predetermined first depth beneath the bearing surface, configured to detect wear of the liner to said first predetermined depth, and
a second sensor positioned at a predetermined second depth beneath the bearing surface, configured to detect wear of the liner to said second predetermined depth.

Preferably, the second predetermined depth is deeper than the first predetermined depth.

Preferably, the first depth is 1.5 mm and the second depth is 2.0 mm.

Preferably, the or each sensor comprises at least two contacts, spaced apart from one another, each of the contacts terminating at said predetermined depth beneath the bearing surface, configured such that, in use, when the liner is worn to said predetermined depth, at least two of the contacts are exposed and are able to contact a conductive bearing element locatable in the housing to electrically connect the exposed contacts.

Preferably, the bearing arrangement further comprises a wear sensing module connected to the at least two contacts, operable to detect when the contacts are electrically connected to one another through a conductive bearing element in use.

Preferably, the wear sensing module measures the resistance and/or conductivity of a circuit comprising the two contacts connected in series.

Preferably, the bearing arrangement further comprises an electrically conductive bearing element arranged in sliding engagement with the liner, wherein the or each sensor comprises at least one contact terminating at said predetermined depth beneath the surface, configured such that, in use, when the liner is worn to said predetermined depth, the contact is exposed and is able to contact the conductive bearing element.

Preferably, the bearing arrangement further comprises a wear sensing module connected to the at least one contact and the bearing element, operable to detect when at least one contact is electrically connected to the conductive bearing element.

Preferably, the liner comprises at least one bore extending from the bearing surface, the sensor disposed in the/each bore and comprising a sensor head operatively connected to a force sensing module, wherein the sensor head is slidably mounted in the bore and arranged to be in contact with a bearing element receivable in the housing in use, such that the force imparted on the force sensing module by the sensor head increases as the liner wears.

Preferably, the bearing arrangement further comprises a spring arranged between the sensor head and the force sensing module, the spring configured to bias the sensor head into engagement with a bearing element in use and to transfer the force imposed on the sensor head by the bearing element to the force sensing module.

Preferably, the bearing arrangement further comprises a wear sensing module connected to the force sensing module which is configured to determine the extent of any wear of the liner.

Preferably, the housing comprises a base and a central post upstanding from the base, further comprising:
an outer ball seated at least partially within the housing, having an outer surface and an inner surface, the outer surface being in sliding contact with the bearing surface of the liner;
an inner ball mounted on the central post, having an outer surface in sliding contact with the inner surface of the outer ball, such that the outer ball is sandwiched between the inner ball and the liner.

The present invention further provides a thrust coupling bearing arrangement comprising:
a housing comprising a base and a central post upstanding from the base;
a liner positioned within the housing and providing a bearing surface;
an outer ball seating at least partially within the housing, having an outer surface and an inner surface, the outer surface being in sliding contact with the bearing surface of the liner;
an inner ball mounted on the central post, having an outer surface in sliding contact with the inner surface of the outer ball, such that the outer ball is sandwiched between the inner ball and the liner; and
at least one sensor associated with the liner, configured to measure the distance between the sensor and the outer surface of the outer ball.

Preferably, the bearing arrangement further comprises a memory module, configured to store the measured distance.

Preferably, the bearing arrangement is configured to measure the distance between the sensor and the outer ball at predetermined intervals during operation, wherein if the distance measured is less than the distance stored in the memory, updating the memory with the lower distance.

Preferably, the bearing arrangement further comprises a transmitter or transceiver, operable to transmit the measured distance.

Preferably, the transceiver utilises RFID

Preferably, the at least one sensor is one a capacitive or inductive sensor.

The present invention further provides a method of detecting wear on a liner of a bearing arrangement, the bearing arrangement comprising a housing and a liner positioned within the housing and providing a bearing surface, at least one sensor within the liner, positioned at a predetermined depth beneath the bearing surface, the method comprising:
detecting wear of the liner to said predetermined depth.

The present invention further provides a method of monitoring a bearing arrangement, comprising:
associating a sensor with a liner of a bearing arrangement so as to be operable to measure, in use, the distance between the sensor and a bearing element positioned against the liner;
measuring the distance between the sensor and the bearing element;
recording said distance as a datum;
measuring said distance during operation of the bearing arrangement, wherein:
   if the distance measured is less than the datum, updating said datum to be equal to the measured distance; and
   if the distance measured is greater than the datum, issuing a bearing failure alarm signal.

Preferably, measuring said distance during operation of the bearing arrangement includes measuring said distance at predetermined time intervals.

Preferably, the method further comprises issuing a depth alarm signal if the distance measured is less than a predetermined distance.

Preferably, the method further comprises issuing a first wear alarm signal if the distance measured is less than a predetermined first distance, and issuing a second wear alarm signal if the distance measured is less than a predetermined second distance.

Preferably, the method further comprises determining, from the distance measured between the sensor and the bearing element, the thickness of the liner.

The present invention further provides a method of monitoring a bearing arrangement, wherein the bearing arrangement comprises a thrust coupling bearing arrangement comprising:
a housing comprising a base and a central post upstanding from the base;
a liner positioned within the housing and providing a bearing surface;
an outer ball seating at least partially within the housing, having an outer surface and an inner surface, the outer surface being in sliding contact with the bearing surface of the liner;
an inner ball mounted on the central post, having an outer surface in sliding contact with the inner surface of the outer ball, such that the outer ball is sandwiched between the inner ball and the liner;
at least one sensor associated with the liner, configured to measure the distance between the sensor and the outer surface of the outer ball; and
an RFID transceiver operable to transmit the measured distance.
the method comprising:
   interrogating the RFID transceiver with a portable device
   receiving from the RFID transceiver a distance measured by the at least one sensor.

Embodiments of the present invention will now be described by way of example only with reference to the figures in which:
Figure 1 schematically illustrates a cross section of a bearing arrangement embodying the present invention;
Figure 2 schematically illustrates the sensor of a bearing arrangement embodying the present invention;
Figure 3 shows the underside of a bearing arrangement embodying the present invention;
Figure 4 schematically illustrates a cross-section of another bearing arrangement embodying the present invention;
Figure 5 illustrates a sensor of the bearing arrangement embodying the present invention; and
Figure 6 schematically illustrates a cross section of part of another bearing arrangement embodying the present invention.

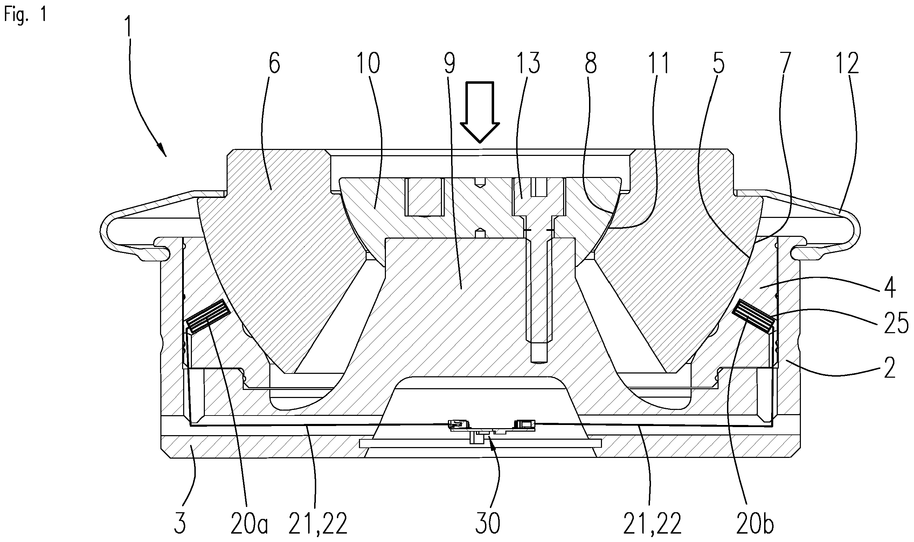

Figure 1 illustrates a thrust coupling bearing 1, which comprises a housing 2 comprising a circular base 3 and a generally cylindrical side wall. The housing 2 is further provided with a central post 9 upstanding from the base 3. The central post 9 is preferably integrally formed with the central post 9. The housing 2 is preferably manufactured from alloy steel.

A liner 4 is received in the housing 2, such that it rests upon the circular base 3. The liner 4 provides a substantially spherical bearing surface 5.

An outer ball 6 has an outer substantially spherical bearing surface 7 and an inner substantially spherical bearing surface 8. The outer surface 7 of the outer ball 6 is in sliding contact, in use, with the bearing surface 5 of the liner 4.

The thrust coupling arrangement 1 further comprises an inner ball 10 mounted on the central post 9, having an outer spherical bearing surface 11 in sliding contact with the inner spherical bearing surface 8 of the outer ball 6, such that the outer ball 6 is sandwiched between the inner ball 10 and the liner 4 inserted in the housing 2. As is disclosed in WO03/029065, the inner ball 10 may be secured to the post 9 by a plurality of screws 13, one of which is shown in cross section in figure 1.

In use, the outer ball 6 is able to slide and rotate with respect to the inner ball 10 and the liner 4. A seal gator 12 may be provided to prevent or reduce the ingress of debris into the bearing interfaces 5:7. During operation, the liner 4 tends to wear, through the sliding motion of the spherical bearing interface 7 of the outer ball 6 against the spherical bearing surface 5 of the liner 4.

According to one embodiment of the present invention, a bearing arrangement 1 comprises at least one sensor 20 within the liner 4, positioned at a predetermined depth beneath the bearing surface 5 of the liner 4, configured to detect wear of the liner 4 to a predetermined depth.

In the embodiment shown in figure 1, there are two sensors 20a, 20b, embedded in the liner 4. In one embodiment (not shown) only part of the sensor 20 may be embedded in the liner, with another part of the sensor being received in a void between the liner 4 and the housing 3 or in the housing 2 itself.

In one embodiment, at least a part of the at least 1 sensor 20 may be integrally formed with the liner 4.

In one embodiment, the two or more sensors 20 may both be positioned at the same predetermined depth beneath the bearing surface 5, so as to offer redundancy. In use, the extent of the wear on the liner 4 may differ depending on the location of the sensor, so that it may be beneficial to provide multiple sensors, at different points in the liner, all at the same predetermined depth, to determine wear.

In another embodiment, a first sensor 20a may be positioned at a different depth to a second sensor 20b.

In the embodiment shown in figure 1, the first sensor 20a is positioned at a predetermined first depth, preferably from 0.5 to 2mm, beneath the bearing surface 5 of the liner 4, configured to detect wear of the liner 4 to said first predetermined depth from 0.5 to 2mm. The second sensor 20b is positioned at a predetermined second depth, preferably from 1 to 3mm, beneath the spherical bearing surface 5 of the liner, configured to detect wear of the liner 4 to said second predetermined depth from 1 to 3mm.

Accordingly, the first sensor 20a may be used to issue an "amber alert" to a user that the liner is significantly worn. The second sensor, preferably at a lower depth, may then be used as a "red warning" when the wear on the liner has reached a critical level.

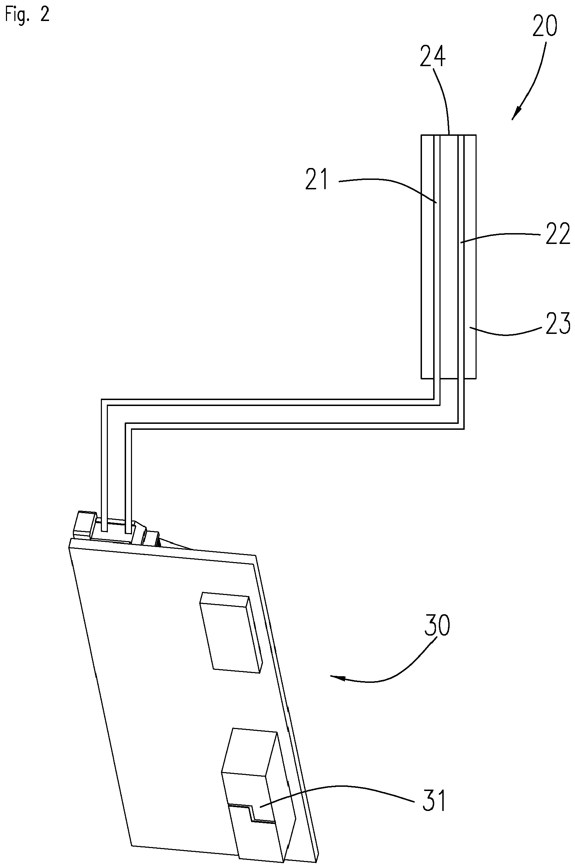

As shown schematically in figure 2, in one embodiment, a sensor 20 comprises as least two contacts 21, 22, spaced apart from one another. When installed in the liner 4, each of the contacts 21, 22 terminates at the predetermined depth beneath the bearing surface 5 of the liner 4. In the arrangement shown in figure 2, the contacts 21, 22 are embedded in a sensor cartridge 23 having a terminal end 24. The contacts 21 and 22 are preferably bonded to the cartridge 23 and have a terminal end 24. The cartridge 23 is preferably a self-lubricating material, preferably a thermoset polymer containing Teflon. The sensor cartridge 23 is inserted into or embedded in a bore 25 provided in the liner 4. The terminal end 24 of the sensor cartridge 23 abuts the base of the bore 25. In use, when the liner 4 is worn to said predetermined depth, the contacts 21, 22 are exposed and are able to contact the outer ball 6. Preferably, the outer ball 6 is electrically conductive.

Further, the bearing arrangement 1 comprises a wear sensing module 30 connected to the at least two contacts 21, 22, operable to detect when the contacts 21, 22 are electrically connected to one another through the conductive outer ball 6. In one embodiment, the wear sensing module 30 measures a resistance, and/or the conductivity of a circuit comprising the two contacts 21, 22 connected in the series. In one embodiment (not shown) the contacts 21, 22 are connected with a wire. The wire is positioned in a groove in the liner 4 and has a different electrical resistance to the outer ball 6. When the wear of the liner 4 destroys the wire of the contacts 21, 22 and the contacts 21, 22 are connected with the outer ball 6 there is another electrical resistance which can trigger the alert. With reference to figure 2, it will be appreciated that when the terminal end 24 is in contact with a conductive element, the circuit including contacts 21, 22 will be closed, which can be used to confirm that wear has taken place down to the level of the terminal end 24 of the sensor cartridge 23.

Preferably, the contacts 21, 22, or at least the part of which that are embedded in the sensor cartridge 23, are formed of conductive material, preferably cooper with a thin tin plating. In use, particularly if the sensor arrangement shown in figure 2 is used as the "amber" alert, it is envisaged that the bearing arrangement will continue to operate, wearing down the liner 4 still further. Accordingly, the material of the sensor cartridge 23 in which the contacts 21, 22 are embedded is also preferably configured to wear at the same or greater rate than the material of the liner 4.

Consequently, the worn sensor cartridge 23 should not cause any damage to the spherical bearing surface 7 of the outer ball 6.

As an alternative to providing the contacts 21, 22 in a sensor cartridge 23 which is then insertable into a bore in the liner 4, the contacts 21, 22 may instead be insertable into dedicated bores provided in the liner 4.

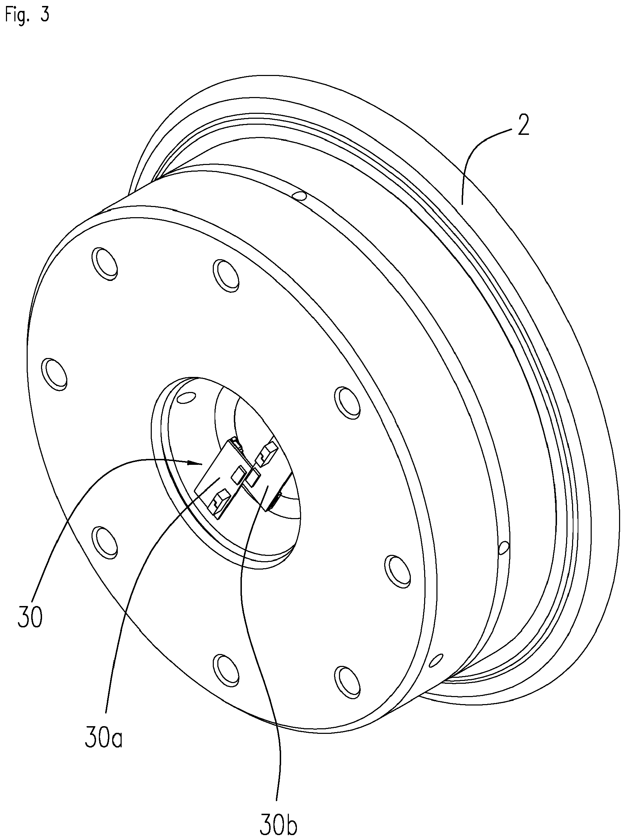

Preferably, the wear sensing module 30 further comprises a transmitter or transceiver 31, operable to transmit a signal equal to, representing, or dependent on the measurement(s) made by the sensor(s). Preferably, the transceiver utilises RFID technology, so the wear sensing module 30 can be interrogated by an external hand-held RFID device, which receives a signal from the wear sensing module 30. Figure 3 illustrates a thrust coupling bearing arrangement embodying the present invention from the underside, showing the two wear sensing modules 30 associated with each of the two sensors 30a, 30b. Rather than using a handheld device, there may be fixed detectors within the tracks at predetermined locations or in a maintenance location, which serve automatically to read the RFID modules as the vehicle passes over.

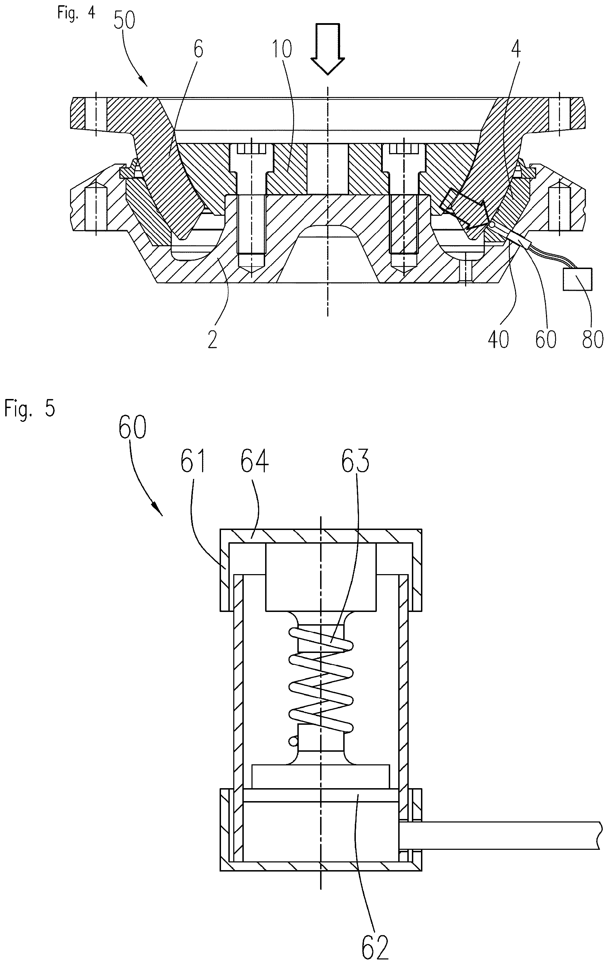

Figure 4 illustrates a bearing arrangement 50 according to another embodiment of the present invention. The bearing arrangement 50 shown in figure 4 is broadly similar to the bearing arrangement 1 shown in figure 1. That is to say the arrangement 50 comprises a housing 2, outer ball 6 and inner ball 10, with a liner sandwiched between the outer ball 6 and the housing 2.

The liner 4 comprises a bore 40, extending into the liner 4 from the bearing interface 5. A sensor 60 is disposed in the bore 40. More than one sensor may be provided, at different locations of the liner, as with the arrangement 1 shown in figure 1.

The sensor 60 comprises a sensor head 61 which is operatively connected to a force sensing module 62 (e.g. a strain gauge). A spring 63 is arranged between the sensor head 61 and force sensing module 62. In use, the sensor head 61 is slidably engaged in the bore 40. Preferably, the outer diameter of the cylindrical sensor head 61 is slightly less than the inner diameter of the bore 40. As such, the sensor head 61 is largely constrained to linear movement within the bore 60. The position of the force sensing module 62 is preferably fixed in relation to the bore 40.

In operation, the spring 63 urges the sensor head 61 away from the force sensing module 62. The dimensions of the bore 40, sensor head 61 and/or spring 63 are such that the top surface 64 of the sensor head 61 is urged to engage with the bearing surface 7 of the outer ball 6. Accordingly, as the liner 4 wears in use, the distance between the top surface 64 of the sensor head 61 and the force sensing module 62 will reduce. The spring 63 serves to bias the sensor head 61 into engagement with the bearing surface 7 of the outer ball 6, whilst also transferring all or some of the force imposed on the sensor head 61 by the outer ball 6 in use.

As with the arrangement shown in figures 1 to 3, the bearing arrangement 50 illustrated in figures 4 and 5 preferably comprises a wear sensing module 80 connected to the force sensing module 60, which is configured to determine the extent of any wear of the liner 4. A benefit of the arrangement of figures 4 and 5 is that the extent of wear is measurable and quantifiable, rather than simply determining whether or not wear has occurred to a predetermined level. The sensor of figures 4 and 5 can therefore give a continuous reading of the force imposed on the force sensing module 62, and/or the amount of wear which is determined as having occurred as a result. From that measurement can be determined or at least estimated the extent of wear which has occurred on the liner 4. If the thickness of the liner 4 was known at a calibration step, the output of the force sensing module 62 can be used to determine or estimate the depth of the worn liner at any point in time.

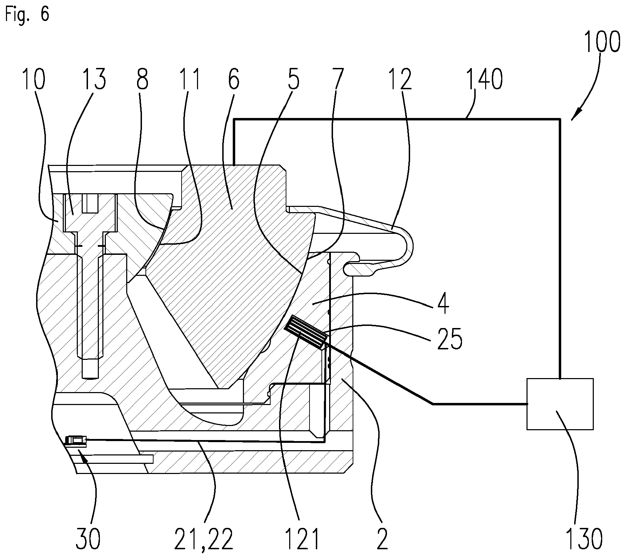

As an alternative arrangement to the sensor shown in figure 2, which has two contacts 21, 22 which must be closed by coming into contact with a conductive outer ball 6, another arrangement of sensor 20 may comprise only one contact 21, as shown schematically in Figure 6. In such an arrangement 100, the wear sensing module 130 is connected with a wire 140 to the at least one contact 121 and the conductive outer ball 6. When the liner has worn to a predetermined level, the exposed contact 121 will come into conductive contact with the outer ball 6, from which the extent of the wear can be determined.

Any of the sensors and/or wear sensing modules may comprise a memory unit configured to store the predetermined depth, the measured depth and/or whether the sensor has indicated that wear has occurred to a predetermined depth. The measurements by the sensor and/or the memory may be transmitted to a user either wirelessly or by wire. In the case of a wireless configuration, the wear sensing module may be interrogated by a hand-held RFID device.

Accordingly, a benefit of the present invention is that rather than needing to disassemble the bearing arrangement to determine the extent of any wear, an operator can simply interrogate a transceiver on the wear sensing module to determine the extent of any wear which might have occurred. As a result, safety can be improved because the intervals at which such measurements are taken can be reduced.

In another embodiment, not shown, a thrust coupling bearing arrangement comprises at least one sensor associated with the liner 4, configured to measure the distance between the sensor and the outer surface 7 of the outer ball 6.

By comparison to the embodiments of the invention illustrated in figures 1-5 which "actively" determines wear, this embodiment determines the wear of the liner "passively"; that is to say without any direct contact. Preferably, the sensor utilises ultrasonic waves, electrical, inductive or magnetic fields etc to determine the distance between the terminal end of the sensor and the outer ball 6. This sensor, particularly an inductive sensor, needs only little energy for the thickness measurement. The power supply of these sensors can be provided by energy harvesting through vibration or radio waves. Other power supplies can be a long term battery or a wired solution with a bus connection to the train system. An inductive sensor detects the resistance and the inductance of the coupled transformer based on the primary coil and the secondary conductive target, in this case the outer ball 6. A benefit of such passive detection means is that there is no potentially damaging interaction with the bearing surface. A benefit of an inductive sensor is that minimal energy is required to measure the distance between the sensor and the outer ball.

By determining the distance between the terminal end of the sensor and the outer surface 7 of the outer ball 6, the thickness of the liner can be determined or estimated. The sensor may be partially within a part of the liner, or it may be within the housing. All that matters is that the location of the sensor is fixed relative to the housing, serving to determine any wear that is occurring on the liner 4.

The present invention further provides a method of monitoring a bearing arrangement, comprising:
associating a sensor with a liner of a bearing arrangement so as to be operable to measure, in use, the distance between the sensor and a bearing element positioned against the liner;
measuring the distance between the sensor and the bearing element;
recording said distance as a datum;
measuring said distance during operation of the bearing arrangement, wherein:
   if the distance measured is less than the datum, updating said datum to be equal to the measured distance; and
   if the distance measured is greater than the datum, issuing a bearing failure alarm signal.

A benefit of this method embodying the present invention is that it may determine when the bearing elements are loose and not in sliding relationship with one another. When the distance between the sensor and the outer ball 6 is measured to be greater than the datum, i.e. what the distance was previously measured to be, such an event is indicative of a loose connection, possibly loose screws. In such instances, the method serves to alert a user with a 'bearing failure' alarm signal.

As explained above, during use of the bearing, the liner tends to wear. Accordingly, a method embodying the present invention detects and measures such wear, and updates the datum to be equal to the newly measured wear. A benefit of this arrangement is that, regardless of the extent of wear which has occurred to the liner, if even a small gap is detected between the liner and the outer ball 6, the 'bearing failure' alarm signal will be issued. If the datum was not otherwise updated in this way, then if a gap between the liner and the outer ball develops which is less than the total amount of wear on the liner, no alarm signal would be produced, thus failing to alert the user. A method embodying the present invention is able to detect potential failures regardless of the extent of wear which has occurred.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

### PREFERRED FEATURES

[1]. A bearing arrangement comprising:
   a housing,
   a liner positioned within the housing and providing a bearing surface;
   at least one sensor within the liner, positioned at a predetermined depth beneath the bearing surface, configured to detect wear of the liner to said predetermined depth.
[2]. A bearing arrangement according to clause 1, wherein at least part of the at least one sensor is embedded within the liner.
[3]. A bearing arrangement according to any preceding clause, wherein at least part of the at least one sensor is integrally formed with the liner.
[4]. A bearing arrangement according to any preceding clause, comprising two sensors within the liner, wherein
   a first sensor positioned at a predetermined first depth beneath the bearing surface, configured to detect wear of the liner to said first predetermined depth, and
   a second sensor positioned at a predetermined second depth beneath the bearing surface, configured to detect wear of the liner to said second predetermined depth.
[5]. A bearing arrangement according to clause [4], wherein the second predetermined depth is deeper than the first predetermined depth.
[6]. A bearing arrangement according to any of clauses [4] and [5], wherein the first depth is 1.5 mm and the second depth is 2.0 mm.
[7]. A bearing arrangement according to any preceding clause, wherein the or each sensor comprises at least two contacts, spaced apart from one another, each of the contacts terminating at said predetermined depth beneath the bearing surface, configured such that, in use, when the liner is worn to said predetermined depth, at least two of the contacts are exposed and are able to contact a conductive bearing element locatable in the housing to electrically connect the exposed contacts.
[8]. A bearing arrangement according to clause [7], further comprising a wear sensing module connected to the at least two contacts, operable to detect when the contacts are electrically connected to one another through a conductive bearing element in use.
[9]. A bearing arrangement according to clause [8], wherein the wear sensing module measures the resistance and/or conductivity of a circuit comprising the two contacts connected in series.
[10]. A bearing arrangement according to any of clauses [1] to [6], further comprising an electrically conductive bearing element arranged in sliding engagement with the liner, wherein the or each sensor comprises at least one contact terminating at said predetermined depth beneath the surface, configured such that, in use, when the liner is worn to said predetermined depth, the contact is exposed and is able to contact the conductive bearing element.
[11]. A bearing arrangement according to clause [10], further comprising a wear sensing module connected to the at least one contact and the bearing element, operable to detect when at least one contact is electrically connected to the conductive bearing element.
[12]. A bearing arrangement according to clause [1], wherein the liner comprises at least one bore extending from the bearing surface, the sensor disposed in the/each bore and comprising a sensor head operatively connected to a force sensing module, wherein the sensor head is slidably mounted in the bore and arranged to be in contact with a bearing element receivable in the housing in use, such that the force imparted on the force sensing module by the sensor head increases as the liner wears.
[13]. A bearing arrangement according to clause [12], further comprising a spring arranged between the sensor head and the force sensing module, the spring configured to bias the sensor head into engagement with a bearing element in use and to transfer the force imposed on the sensor head by the bearing element to the force sensing module.
[14]. A bearing arrangement according to clause [13], further comprising a wear sensing module connected to the force sensing module which is configured to determine the extent of any wear of the liner.
[15]. A bearing according to any preceding clause, wherein the housing comprises a base and a central post upstanding from the base, further comprising:
   an outer ball seated at least partially within the housing, having an outer surface and an inner surface, the outer surface being in sliding contact with the bearing surface of the liner;
   an inner ball mounted on the central post, having an outer surface in sliding contact with the inner surface of the outer ball, such that the outer ball is sandwiched between the inner ball and the liner.
[16]. A thrust coupling bearing arrangement comprising:
   a housing comprising a base and a central post upstanding from the base;
   a liner positioned within the housing and providing a bearing surface;
   an outer ball seating at least partially within the housing, having an outer surface and an inner surface, the outer surface being in sliding contact with the bearing surface of the liner;
   an inner ball mounted on the central post, having an outer surface in sliding contact with the inner surface of the outer ball, such that the outer ball is sandwiched between the inner ball and the liner; and
   at least one sensor associated with the liner, configured to measure the distance between the sensor and the outer surface of the outer ball.
[17]. A bearing arrangement according to clause [16], further comprising a memory module, configured to store the measured distance.
[18]. A bearing arrangement according to clause [17], configured to measure the distance between the sensor and the outer ball at predetermined intervals during operation, wherein if the distance measured is less than the distance stored in the memory, updating the memory with the lower distance.
[19]. A bearing arrangement according to any of clauses [16] to [18], further comprising a transmitter or transceiver, operable to transmit the measured distance.
[20]. A bearing arrangement according to clause [19], wherein the transceiver utilises RFID
[21]. A bearing arrangement according to any of clauses [16] to [20], wherein the at least one sensor is one a capacitive or inductive sensor.
[22]. A method of detecting wear on a liner of a bearing arrangement, the bearing arrangement comprising a housing and a liner positioned within the housing and providing a bearing surface, at least one sensor within the liner, positioned at a predetermined depth beneath the bearing surface, the method comprising:
   detecting wear of the liner to said predetermined depth.
[23]. A method of monitoring a bearing arrangement, comprising:
   associating a sensor with a liner of a bearing arrangement so as to be operable to measure, in use, the distance between the sensor and a bearing element positioned against the liner;
   measuring the distance between the sensor and the bearing element;
   recording said distance as a datum;
   measuring said distance during operation of the bearing arrangement, wherein:
      if the distance measured is less than the datum, updating said datum to be equal to the measured distance; and
      if the distance measured is greater than the datum, issuing a bearing failure alarm signal.
[24]. A method according to clause [23], wherein measuring said distance during operation of the bearing arrangement includes measuring said distance at predetermined time intervals.
[25]. A method according to any of clauses [23] and [24], further comprising issuing a depth alarm signal if the distance measured is less than a predetermined distance.
[26]. A method according to any of clauses [23] to [25], further comprising issuing a first wear alarm signal if the distance measured is less than a predetermined first distance, and issuing a second wear alarm signal if the distance measured is less than a predetermined second distance.
[27]. A method according to any of clauses [23] to [26], further comprising determining, from the distance measured between the sensor and the bearing element, the thickness of the liner.
[28]. A method of monitoring a bearing arrangement, wherein the bearing arrangement comprises a thrust coupling bearing arrangement comprising:
   a housing comprising a base and a central post upstanding from the base;
   a liner positioned within the housing and providing a bearing surface;
   an outer ball seating at least partially within the housing, having an outer surface and an inner surface, the outer surface being in sliding contact with the bearing surface of the liner;
   an inner ball mounted on the central post, having an outer surface in sliding contact with the inner surface of the outer ball, such that the outer ball is sandwiched between the inner ball and the liner;
   at least one sensor associated with the liner, configured to measure the distance between the sensor and the outer surface of the outer ball; and
   an RFID transceiver operable to transmit the measured distance.
   the method comprising:
      interrogating the RFID transceiver with a portable device
      receiving from the RFID transceiver a distance measured by the at least one sensor.

## Claims

1. A bearing arrangement comprising:
a housing,
a liner positioned within the housing and providing a bearing surface;
at least one sensor within the liner, positioned at a predetermined depth beneath the bearing surface, configured to detect wear of the liner to said predetermined depth.

2. A bearing arrangement according to claim 1, wherein at least part of the at least one sensor is embedded within the liner.

3. A bearing arrangement according to any preceding claim, wherein at least part of the at least one sensor is integrally formed with the liner.

4. A bearing arrangement according to any preceding claim, comprising two sensors within the liner, wherein
a first sensor positioned at a predetermined first depth beneath the bearing surface, configured to detect wear of the liner to said first predetermined depth, and
a second sensor positioned at a predetermined second depth beneath the bearing surface, configured to detect wear of the liner to said second predetermined depth, preferably, wherein the second predetermined depth is deeper than the first predetermined depth, preferably, wherein the first depth is 1.5 mm and the second depth is 2.0 mm.

5. A bearing arrangement according to any preceding claim, wherein the or each sensor comprises at least two contacts, spaced apart from one another, each of the contacts terminating at said predetermined depth beneath the bearing surface, configured such that, in use, when the liner is worn to said predetermined depth, at least two of the contacts are exposed and are able to contact a conductive bearing element locatable in the housing to electrically connect the exposed contacts, preferably further comprising a wear sensing module connected to the at least two contacts, operable to detect when the contacts are electrically connected to one another through a conductive bearing element in use, preferably wherein the wear sensing module measures the resistance and/or conductivity of a circuit comprising the two contacts connected in series.

6. A bearing arrangement according to any of claims 1 to 5, further comprising an electrically conductive bearing element arranged in sliding engagement with the liner, wherein the or each sensor comprises at least one contact terminating at said predetermined depth beneath the surface, configured such that, in use, when the liner is worn to said predetermined depth, the contact is exposed and is able to contact the conductive bearing element, preferably further comprising a wear sensing module connected to the at least one contact and the bearing element, operable to detect when at least one contact is electrically connected to the conductive bearing element.

7. A bearing arrangement according to claim 1, wherein the liner comprises at least one bore extending from the bearing surface, the sensor disposed in the/each bore and comprising a sensor head operatively connected to a force sensing module, wherein the sensor head is slidably mounted in the bore and arranged to be in contact with a bearing element receivable in the housing in use, such that the force imparted on the force sensing module by the sensor head increases as the liner wears, preferably further comprising a spring arranged between the sensor head and the force sensing module, the spring configured to bias the sensor head into engagement with a bearing element in use and to transfer the force imposed on the sensor head by the bearing element to the force sensing module, preferably further comprising a wear sensing module connected to the force sensing module which is configured to determine the extent of any wear of the liner.

8. A bearing according to any preceding claim, wherein the housing comprises a base and a central post upstanding from the base, further comprising:
an outer ball seated at least partially within the housing, having an outer surface and an inner surface, the outer surface being in sliding contact with the bearing surface of the liner;
an inner ball mounted on the central post, having an outer surface in sliding contact with the inner surface of the outer ball, such that the outer ball is sandwiched between the inner ball and the liner.

9. A thrust coupling bearing arrangement comprising:
a housing comprising a base and a central post upstanding from the base;
a liner positioned within the housing and providing a bearing surface;
an outer ball seating at least partially within the housing, having an outer surface and an inner surface, the outer surface being in sliding contact with the bearing surface of the liner;
an inner ball mounted on the central post, having an outer surface in sliding contact with the inner surface of the outer ball, such that the outer ball is sandwiched between the inner ball and the liner; and
at least one sensor associated with the liner, configured to measure the distance between the sensor and the outer surface of the outer ball.

10. A bearing arrangement according to claim 9, further comprising a memory module, configured to store the measured distance, the bearing arrangement preferably configured to measure the distance between the sensor and the outer ball at predetermined intervals during operation, wherein if the distance measured is less than the distance stored in the memory, updating the memory with the lower distance, preferably further comprising a transmitter or transceiver (for example RFID) operable to transmit the measured distance.

11. A bearing arrangement according to any of claims 9 to 10, wherein the at least one sensor is one of a capacitive or inductive sensor.

12. A method of detecting wear on a liner of a bearing arrangement, the bearing arrangement comprising a housing and a liner positioned within the housing and providing a bearing surface, at least one sensor within the liner, positioned at a predetermined depth beneath the bearing surface, the method comprising:
detecting wear of the liner to said predetermined depth.

13. A method of monitoring a bearing arrangement, comprising:
associating a sensor with a liner of a bearing arrangement so as to be operable to measure, in use, the distance between the sensor and a bearing element positioned against the liner;
measuring the distance between the sensor and the bearing element;
recording said distance as a datum;
measuring said distance during operation of the bearing arrangement, preferably at predetermined time intervals, wherein:
if the distance measured is less than the datum, updating said datum to be equal to the measured distance; and
if the distance measured is greater than the datum, issuing a bearing failure alarm signal.

14. A method according to claim 13, further comprising:
issuing a depth alarm signal if the distance measured is less than a predetermined distance; and/or
issuing a first wear alarm signal if the distance measured is less than a predetermined first distance, and issuing a second wear alarm signal if the distance measured is less than a predetermined second distance; and/or
determining, from the distance measured between the sensor and the bearing element, the thickness of the liner.

15. A method of monitoring a bearing arrangement, wherein the bearing arrangement comprises a thrust coupling bearing arrangement comprising:
a housing comprising a base and a central post upstanding from the base;
a liner positioned within the housing and providing a bearing surface;
an outer ball seating at least partially within the housing, having an outer surface and an inner surface, the outer surface being in sliding contact with the bearing surface of the liner;
an inner ball mounted on the central post, having an outer surface in sliding contact with the inner surface of the outer ball, such that the outer ball is sandwiched between the inner ball and the liner;
at least one sensor associated with the liner, configured to measure the distance between the sensor and the outer surface of the outer ball; and
an RFID transceiver operable to transmit the measured distance.
the method comprising:
interrogating the RFID transceiver with a portable device
receiving from the RFID transceiver a distance measured by the at least one sensor.
